(19) Europäisches Patentamt
European Patent Office
Office européen des brevets

(11) EP 1 582 509 B1

(12) **EUROPEAN PATENT SPECIFICATION**

(45) Date of publication and mention of the grant of the patent:
**12.10.2016 Bulletin 2016/41**

(51) Int Cl.:
***C04B 35/195*** *(2006.01)*

(21) Application number: **05251907.1**

(22) Date of filing: **29.03.2005**

(54) **Dense cordierite based sintered body**

Dichter Sinterkörper auf Basis von Cordierit

Corps dense fritté à base de cordiérite

(84) Designated Contracting States:
**DE FR GB**

(30) Priority: **29.03.2004 JP 2004095695**
**28.02.2005 JP 2005053154**

(43) Date of publication of application:
**05.10.2005 Bulletin 2005/40**

(73) Proprietor: **NGK Insulators, Ltd.**
**Nagoya-City, Aichi Pref. 467-8530 (JP)**

(72) Inventors:
- **Teratani, Naomi**
**Nagoya City**
**Aichi-ken 467-8530 (JP)**
- **Yamada, Naohito**
**Nagoya City**
**Aichi-ken 467-8530 (JP)**
- **Sakai, Hiroaki**
**Nagoya City**
**Aichi-ken 467-8530 (JP)**

(74) Representative: **Naylor, Matthew John et al**
**Mewburn Ellis LLP**
**City Tower**
**40 Basinghall Street**
**London EC2V 5DE (GB)**

(56) References cited:
**EP-A- 1 338 580**
**GB-A- 2 161 152**
**JP-A- 2002 321 969**
**US-A- 4 280 845**
**US-A- 5 064 790**
**US-A- 5 188 886**
**US-A- 5 270 270**

- **NAKAHARA N ET AL: "Effect of particle size of powders ground by ball milling on densification of cordierite ceramics" JOURNAL OF THE CERAMIC SOCIETY OF JAPAN CERAMIC SOC. JAPAN JAPAN, vol. 107, no. 4, April 1999 (1999-04), pages 308-312, XP002468115 ISSN: 0914-5400**
- **AWANO M ET AL: "Synthesis of cordierite and cordierite-ZrSiO4 composite by colloidal processing" J MATER SCI; JOURNAL OF MATERIALS SCIENCE JAN 15 1994, vol. 29, no. 2, 15 January 1994 (1994-01-15), pages 412-418, XP002468116**
- **CHAN K C ET AL: "Emulsion processing as a novel route to cordierite" JOURNAL OF MATERIALS SCIENCE KLUWER ACADEMIC PUBLISHERS USA, vol. 37, no. 5, 1 March 2002 (2002-03-01), pages 971-976, XP001082963 ISSN: 0022-2461**
- **CAMERUCCI M A ET AL: "slip casting of cordierite and cordierite- mullite materials" JOURNAL OF THE EUROPEAN CERAMIC SOCIETY, ELSEVIER SCIENCE PUBLISHERS, BARKING, ESSEX, GB, vol. 18, no. 14, December 1998 (1998-12), pages 2149-2157, XP004144428 ISSN: 0955-2219**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 582 509 B1

## Description

### BACKGROUND OF THE INVENTION

#### Field of the Invention

The present invention relates to a dense cordierite based sintered body, particularly to a dense cordierite based sintered body having a satisfactory strength, high-temperature thermal expansion coefficient, and electric characteristic.

#### Description of the Related Art

Cordierite has a small coefficient of thermal expansion, and indicates a superior characteristic, and has been used in various fields. However, it is difficult to densify cordierite, and a dense cordierite based sintered body substantially formed of cordierite only is not obtained. Therefore, a method has been proposed in which rare earth oxide such as yttrium oxide is added to obtain a dense sinter, and this sintered body does not have a sufficient strength.

As this sintered body, a sintered body has been described containing 93 to 99.99% by mass of cordierite and 0.01 to 7% by mass of silicon nitride, and having a porosity of 5% or less for a purpose of enhancing strength and Young's modulus (see Japanese Patent Application Laid-Open No. 2002-321969).

Moreover, a sintered body of cordierite ceramic has been described containing 0.1 to 10% by mass of samarium oxide for a purpose of improving permittivity, dielectric loss, and coefficient of thermal expansion of the cordierite based sintered body (see Japanese Patent Publication No. 6-74172).

However, in the method using the additive, a specific characteristic can be improved, but any of original characteristics of cordierite is impaired.

Moreover, an example has been described in which cordierite powder is sintered at high temperature to obtain a dense article (see M. A. Camerucci, et al. "Mechanical behavior of cordierite and cordierite-mullite materials evaluated by indentation techniques", Journal of the European Ceramic Society 21 (2001) 1195 to 1204). However, in this example, since the powder is sintered at high temperature, a glassy phase is formed. Therefore, the obtained sintered body contains a considerable amount of glassy phase, and does not indicate any sufficient characteristic originally owned by cordierite.

US-A-4280845 describes a porous cordierite ceramic, suitable for use as a honeycomb catalyst substrate, in which small amounts of the additional phases spinel, sapphirine and mullite are present. In the examples of products in this document, the total pore volume is in the range 0.19 to 0.36 $cm^3/g$.

EP1338580 discloses a dense cordierite ceramic with 97 vol.% cordierite phase and 3 vol.% mullite phase, made by sintering of 100 wt% cordierite powder of mean particle size 1.7 micron for 12 hours at 1400°C.

### SUMMARY OF THE INVENTION

An object of the present invention is to provide a dense cordierite based sintered body indicating a satisfactory original characteristic of cordierite, and a sufficient strength. The dense sintered body indicating a sufficient strength can be made even when any additive is not especially added.

According to the present invention, there are provided the dense cordierite based sintered body set out in claim 1.

Preferably the dense cordierite based sintered body has a bending strength 200 MPa or more.

Preferably the dense cordierite based sintered body has a coefficient of thermal expansion from 40 to 600°C is $2.0 \times 10^{-6}$/K or less.

The dense cordierite based sintered body of the present invention indicates a satisfactory original characteristic of cordierite, and a sufficient strength.

### BRIEF DESCRIPTION OF THE DRAWINGS

FIG. 1 is a photograph showing backscattering electron image of a fracture surface of a sintered body obtained in Example 1 by an electron microscope;

FIG. 2 is a photograph showing secondary electron image after thermally etching a polished surface of the sintered body obtained in Example 1;

FIG. 3 is a photograph showing backscattering electron image of the fracture surface of the sintered body obtained in Example 11;

FIG. 4 is a photograph showing backscattering electron image of the fracture surface of the sintered body obtained in Comparative Example 1;

FIG. 5 is a photograph showing backscattering electron image of the fracture surface of the sintered body obtained in Comparative Example 2; and

FIG. 6 is a diagram showing X-ray diffraction pattern profiles of sintered bodies obtained in Examples 6 and 11.

DESCRIPTION OF THE PREFERRED EMBODIMENT

Embodiments of the present invention will be concretely described hereinafter, but it should be understood that the present invention is not limited to the following embodiments.

First, a method of manufacturing a dense cordierite based sintered body of the present invention will be described. In the method, cordierite powder is prepared as a raw material. The cordierite powder can be prepared, for example, as follows.

A cordierite-forming material is fired to form cordierite. Here, the cordierite-forming material means a raw material fired to form cordierite, and is a ceramic material in which 42 to 56% by mass of $SiO_2$, 30 to 45% by mass of $Al_2O_3$, and 12 to 16% by mass of MgO are blended in such a manner as to obtain a chemical composition in this range. Concretely, for example, a plurality of inorganic materials selected from talc, kaolin, calcined kaolin, alumina, aluminum hydroxide, and silica are contained at such a ratio as to obtain the above-described chemical composition.

Next, formed cordierite is pulverized into a cordierite powder. In this case, an average particle diameter of cordierite powder is set to 2 $\mu$m or less, preferably 1 $\mu$m or less, further preferably 0.8 $\mu$m or less. When the average particle diameter of the cordierite powder is reduced in this manner, a dense sintered body having high strength can be obtained without adding any other component. A lower limit of the average particle diameter of the cordierite powder is not especially limited. When the diameter is excessively small, pulverization becomes difficult, or a pulverizing time lengthens in some case. It is also difficult to handle the powder in some case. Therefore, the average particle diameter is preferably 0.1 $\mu$m or more, further preferably 0.3 $\mu$m or more. It is to be noted that this average particle diameter can be measured by a laser diffraction method.

A pulverizing method is not especially limited, and, for example, a ball mill, an attritor, a bead mill, a jet mill and the like may be used in performing the pulverization. Additionally, in this case, the pulverization is performed on a condition that the average particle diameter can further be reduced as compared with usual conditions. For example, when the ball mill is used, a ball for use is reduced, and an appropriate viscosity or treatment time can be selected to thereby obtain a powder having a smaller average particle diameter. With the use of the ball mill which has heretofore been used generally, the pulverizing time is preferably lengthened. For example, the powder having the small average particle diameter can be obtained in about three days. It is to be noted that natural cordierite ore may be pulverized.

The cordierite powder obtained in this manner preferably has a cordierite content of 93% by mass or more, further preferably 95% by mass or more. The content of cordierite is further preferably 100 mass%, but it is difficult to industrially stably obtain the cordierite powder. Therefore, the cordierite powder may contain a secondary phase to a certain degree from practical and economical viewpoints. However, preferably the contained secondary phase does not adversely affect the characteristic of cordierite.

From the above-described viewpoint, the cordierite powder also preferably contain one or more types of crystal phases selected from a group consisting of mullite, spinel, sapphirine, and corundum formed of Al, Mg, Si, O. A total content of cordierite, mullite, spinel, sapphirine, and corundum in the cordierite powder is preferably 95% by mass or more, further preferably 99% by mass or more.

Moreover, Ti is preferably included in cordierite. When Ti is included, sinterability is enhanced. When an excessively large amount of Ti is included, original characteristics of cordierite such as low thermal expansion is unfavorably inhibited. Therefore, an amount of included Ti is preferably 0.7% by mass or less, further preferably 0.5% by mass or less in oxide conversion ($TiO_2$).

Next, the obtained cordierite powder is formed into a predetermined shape. A forming method is not especially limited, and a general forming method can be used. For example, a mixture obtained by adding an organic binder to the cordierite powder is kneaded to form clay, and the clay can be formed into a predetermined shape by pressing, extrusion, sheet forming or the like. Even when any organic binder is not added, the powder can be directly pressurized and formed into the predetermined shape. The formed shape is not especially limited, and may be various in accordance with applications. For example, a disc shape, a plate shape or the like may be formed.

A sheet forming method is carried out under the predetermined conditions after making a mixture in a pot by mixing sufficiently, for example, cordierite powder, a binder, a dispersing agent, a plasticizer and a solvent, and arranging the viscosity of the mixture. If necessary, a sheet-like formed body having desired thickness can be laminated and obtained with thermocompression bonding or CIP (cold isostatic press).

Next, the obtained formed body is heated and degreased. It is to be noted that the degreasing is unnecessary in a case where the body is formed without using any organic binder. Thereafter, the body is further heated and sintered. In this case, sintering temperature, that is, maximum temperature is important. When the sintering temperature is excessively low, particles of the powder are not mutually sufficiently sintered, and a sufficient strength is not obtained. On the other hand, when the temperature is excessively high, a large amount of vitreous materials are generated, pores are enlarged, the strength drops, and further characteristics of cordierite are impaired. Especially, the coefficient of thermal expansion increases. Therefore, the sintering temperature needs to be 1350 to 1450°C, further preferably 1375 to 1425°C.

A retention time at the maximum temperature for the sintering is not especially limited, and a person skilled in the art can appropriately select time in consideration of a shape or size of the formed body, characteristics of a heating furnace and the like. Concrete retention time at preferable maximum temperature is, for example, 1 to 12 hours, further preferably 2 to 8 hours. A sintering atmosphere is not especially limited, and, for example, air atmosphere, inert atmosphere like nitrogen atmosphere or argon atmosphere, and reducing atmosphere like hydrogen atmosphere or mixed atmosphere of hydrogen and nitrogen can be selected.

Additionally, sintering of the formed body using a binder under the inert atmosphere or the reducing atmosphere, without sintering or degreasing in the air atmosphere, is preferably carried out under a humidified atmosphere for degreasing of the formed body.

Next, an embodiment of a dense cordierite based sintered body of the present invention which can be preferably obtained by the above-described manufacturing method will be described.

This sintered body contains 93% by mass or more of cordierite, preferably 94% by mass or more, further preferably 95% by mass or more. Moreover, the average particle diameter of sintered particles is 2 μm or less, preferably 1 μm or less, further preferably 0.8 μm or less.

Accordingly, this sintered body can be achieved which satisfactorily exhibits original characteristics of cordierite, especially high-temperature coefficient of thermal expansion and electric characteristic and which has high strength. It is to be noted that cordierite is sometimes classified into low-temperature type cordierite and high-temperature type cordierite (also referred to as indiarite) in some case, but cordierite in the present invention includes not only low-temperature type cordierite but also high-temperature type cordierite.

In this sintered body, a content of cordierite is preferably higher. However, the sintered body contains a secondary phase to a certain degree in consideration of productivity or the like. The sintered body also contains mullite and at least one of spinel, and sapphirine. In this case, a total content of cordierite, mullite, spinel, and sapphirine in the sintered body is 99% by mass or more.

Moreover, the sintered body may contain a small amount of glassy phase. However, when a content of the glassy phase is excessively large, the coefficient of thermal expansion increases, or other characteristics of cordierite are lowered. Therefore, the content of the glassy phase is 1% by mass or less. It is to be noted that a glass component is first detected usually at 5% by mass or more in XRD measurement.

Moreover, for the reason that the sinterability is enhanced, Ti is preferably included in cordierite. An amount of included Ti is preferably 0.7% by mass in terms of oxide, further preferably 0.5% by mass.

An average particle diameter of the particles which constitute the sintered body increases/decreases depending on the average particle diameter of the cordierite powder, when appropriate sintering conditions are selected. Therefore, for the reasons in the manufacturing, the average particle diameter of the particles which constitute the sintered body is preferably 0.1 μm or more, further preferably 0.3 μm or more. It is to be noted that as to the average particle diameter, from an electron microscope photograph of a sample which is polished into a mirror surface and whose grain boundary is emphasized by thermal etching, cordierite particles are observed, and the diameter is calculated as an average of 30 particles.

Porosity of this sintered body is 2% or less, preferably 1.5% or less, especially preferably 1% or less. When the porosity is lower, strength and insulation destructive characteristic are further enhanced, and the sintered body is more preferable, for example, as a dielectric electrode, or a member for a semiconductor manufacturing apparatus.

This sintered body has a high strength, and the strength can be set in accordance with application and shape of the sintered body in consideration of productivity. Concretely, bending strength is preferably 200 MPa or more, further preferably 210 MPa or more, and remarkably preferably 230 MPa or more. It is to be noted that the strength can be adjusted by the average particle diameter, sintering temperature, sintering time and the like of the cordierite powder.

The coefficient of thermal expansion of this sintered body is preferably $2.0\times10^{-6}$/K or less, further preferably $1.8\times10^{-6}$/K or less. It is to be noted that here the coefficient of thermal expansion means an average coefficient of thermal expansion from 40 to 600°C. At this coefficient of thermal expansion, the sintered body can sufficiently bear practical use even on use conditions exposed at high temperature.

In this sintered body, when Young's modulus is high, the strength is enhanced. However, when the Young's modulus is excessively high, resistance to thermal shock lowers. Therefore, the Young's modulus is preferably 100 to 180 GPa. A dielectric constant is preferably 5 or less. A heat transfer ratio is preferably 10 W/mK or less, further preferably 5 W/mK or less. Insulation destructive strength is preferably 10 kV/mm or more, further preferably 15 kV/mm or more.

To obtain a sintered body having the characteristic in the above-described range, a small amount of components influencing the characteristic is preferably contained. Examples of the components include silicon nitride, rare earth oxide and the like. Silicon nitride is preferably less than 0.01% by mass, further preferably less than 0.005% by mass. Rare earth oxide is preferably less than 0.1% by mass, further preferably less than 0.01% by mass. Furthermore, especially preferably silicon nitride or rare earth oxide is not substantially contained.

[Example]

The present invention will be described hereinafter in more detail in accordance with examples, but the present invention is not limited to the examples.

(Example 1)

Cordierite obtained by sintering a cordierite-forming material was pulverized, and cordierite powder having an average particle diameter of 0.7 μm was obtained.
An obtained powder was pressed by a uniaxial mold, and a formed body was obtained.
The obtained formed body was held at 1400°C in nitrogen atmosphere for 12 hours, and a sintered body was obtained. The obtained sintered body was tested as follows. Results are shown in Table 1.
Average particle diameter (μm) of sintered particles: obtained by the above-described measurement method.
Bulk density (g/cm$^3$): obtained by Archimedes method.
Crystal phase: determined by an X-ray diffraction system. Measurement conditions are CuK$\alpha$, 50 kV, 300 mA, $2\theta$ = 5 - 80°: rotating anode type X-ray diffraction system ("RINT" manufactured by Rigaku Denki).
Crystal component content (mass%): Zinc oxide was used in internal standard, and the content was obtained from a strength ratio of an X-ray diffraction peak of each crystal component.
Total porosity (%): The porosity was obtained from the bulk density, and theoretical density calculated from the content of each crystal phase of the sintered body in the following equation. It is to be noted that to the theoretical density was calculated assuming that sapphirine had a density equal to that of spinel.

$$\text{Total porosity (\%)} = (1 - \text{bulk density}/\text{theoretical density}) \times 100$$

Open porosity (%): obtained by Archimedes method
Bending strength (MPa) : measured at four-point bending strength in conformity to JIS R1601. A test piece shape was measured with a 3 mm × 4 mm × 40 mm transverse rod, or 1/2 size. Here, the term "measured in 1/2 size" means that bending strength is measured when the shape of the test piece is set to 1/2 size of each side of the transverse rod, and also means that both distance between lower supporting points and distance between upper loading points of four-point bending, are set to 1/2 size. Moreover, the thin plate obtained by sheet forming was set with sheet thickness (approx. 1 mm) × 2 mm × 20 mm, and the bending strength was calculated with Weibull modulus obtained by the measured values.
Weibull modulus was obtained in conformity to JIS R1625 and applied to the following formula to calculate the bending strength at the above-mentioned 1/2 size.

$$\frac{\sigma_1}{\sigma_2} = \left(\frac{V_{e2}}{V_{e1}}\right)^{1/m}$$

Here, is breaking stress, $V_e$ is effective volume, and m is Weibull modulus. Moreover, effective volume is represented by the following formula.

$$V_e = \frac{wh}{2(m+1)^2}\left(mS_2 + S_1\right)$$

Here, w is a width of the test piece, h is a height, $S_1$ is a distance between lower supporting points, $S_2$ is a distance between upper loading points and m is Weibull modulus.
Young's modulus (GPa): measured by static deflection method in conformity to JIS R1602. The test piece shape was measured with the 3 mm × 4 mm × 40 mm transverse rod.

Coefficient of thermal expansion (/K): measured in a pushrod differential system in conformity to JIS R1618.

Heat transfer ratio (W/mK): measured by laser flash method in conformity to JIS R1611.

Dielectric constant: measured in a method in conformity to JIS C2141. A test piece shape was set to a 50 mm × 50 mm × 1 mm square plate shape, and each electrode was formed by sputtering evaporation of gold in such a manner as to obtain a main electrode diameter of 14 mm, a guard electrode inner diameter of 16 mm, a guard electrode outer diameter of 22 mm, and an applied electrode diameter of 22 mm.

Insulation destructive strength (kV/mm): measured by a method in conformity to JIS C2141. A test piece shape was a 45 mm × 45 mm × 1 mm square plate shape, and pressure was raised at 1 kV/second.

Volume resistivity Ω·cm): measured in a vacuum atmosphere at room temperature to 700°C in a method in conformity to JIS C2141. A test piece shape was a ϕ 35 mm × 1 mm disc shape, or a 50 mm × 50 mm × 1 mm square plate shape, and each electrode was formed of silver in such a manner as to obtain a main electrode diameter of 10 mm, a guard electrode inner diameter of 20 mm, a guard electrode outer diameter of 30 mm, and an applied electrode diameter of 30 mm. The applied voltage was set to 500 V/mm, a current was read one minute after applying the voltage, and the volume resistivity was calculated.

[Table 1]

| | |
|---|---|
| Average particle diameter of sintered particles (μm) | 0.7 |
| Bulk density (g/cm$^3$) | 2.54 |
| Content (mass%) | Cordierite: 97.6<br>Mullite: 0.3<br>Spinel+sapphirine: 2.1 |
| Total porosity (%) | 0.1 |
| Open porosity (%) | 0.0 |
| 4-point bending strength (MPa) | 230 |
| Young's modulus (GPa) | 150 |
| Coefficient of thermal expansion (/K) | $1.6\times10^{-6}$ |
| Heat transfer ratio (W/mK) | 4.4 |
| Dielectric constant | 4.8 |
| Insulation destructive strength (kV/mm) | 21 |
| Volume resistivity (Ω·cm)<br>Room temperature<br>600°C | <br>$2.0\times10^{15}$<br>$1.5\times10^{10}$ |

(Examples 2 to 14 and Comparative Examples 1 and 2)

As Examples 2 to 14, sintered bodies were obtained in the same manner as in Example 1 except that an average particle diameter of cordierite powder was set to 0.5 to 1.8 μm, and sintering conditions were set to those shown in Table 2. As Comparative Example 1, a sintered body was obtained in the same manner as in Example 1 except that the average particle diameter of the cordierite powder was 6.5 μm, and sintering conditions were set to those shown in Table 2. As Comparative Example 2, a sintered body was obtained in the same manner as in Example 1 except that the average particle diameter of the cordierite powder was 0.5 μm, and sintering conditions were set to those shown in Table 2. Evaluation results of the obtained sintered bodies are shown in Table 2. A backscattering electron image of a fracture surface of the sintered body obtained in Example 1 is shown in FIG. 1, a secondary electron image obtained after thermally etching a polished surface of the sintered body is shown in FIG. 2, a backscattering electron image of the fracture surface of the sintered body obtained in Example 11 is shown in FIG. 3, a backscattering electron image of the fracture surface of the sintered body obtained in Comparative Example 1 is shown in FIG. 4, and an backscattering electron image of the fracture surface of the sintered body obtained in Comparative Example 2 is shown in FIG. 5. It is to be noted that the average particle diameter of the particles which constitute the sintered body was calculated based on the image shown in FIG. 2.

(Examples 15 to 17)

As Examples 15 to 17, an average particle diameter of cordierite powder was set to 1.5 μm. Formed bodies were obtained by sheet forming after making a mixture in a pot by mixing sufficiently the above-described cordierite powder, a binder, a dispersing agent, a plasticizer and a solvent, and arranging the viscosity of the mixture. Next, firing conditions were set to those shown in Table 2, and a sintered body was obtained. In addition, in the mixed atmosphere of hydrogen and nitrogen of the examples 16 to 17, sintering is carried out under the humidified atmosphere for degreasing of formed bodies. The same conditions as in Example 1 were applied except the above described conditions. Evaluation results of the obtained sintered bodies are shown in Table 2.

[Table 2]

| | Average particle diameter of powder (μm) | Maximum Temperature (°C) | RetenTion Time (h) | Sintering Atmosphere | Average particle diameter of sintered particles (μm) | Bulk Density (g/cm$^3$) | Total Porosity (%) | 4-point bending strength (MPa) | Content | | |
|---|---|---|---|---|---|---|---|---|---|---|---|
| | | | | | | | | | Cordierite (%) | Mullite (%) | Spinel+ Sapphirine (%) |
| Example 2 | 0.6 | 1375 | 2 | Air | 0.6 | 2.52 | 1.5 | 205 | 94.2 | 3.9 | 1.9 |
| Example 3 | 0.5 | 1375 | 4 | Air | 0.5 | 2.54 | 0.5 | 228 | 94.0 | 4.1 | 1.8 |
| Example 4 | 0.6 | 1375 | 8 | Air | 0.6 | 2.54 | 0.9 | 219 | 93.6 | 4.1 | 2.4 |
| Example 5 | 0.5 | 1400 | 2 | Air | 0.5 | 2.54 | 0.9 | 239 | 93.8 | 4.4 | 1.9 |
| Example 6 | 0.5 | 1400 | 4 | Air | 0.5 | 2.53 | 1.1 | 214 | 93.4 | 4.4 | 2.2 |
| Example 7 | 0.6 | 1400 | 8 | Air | 0.6 | 2.53 | 0.7 | 220 | 94.0 | 4.0 | 2.0 |
| Example 8 | 0.6 | 1425 | 2 | Air | 0.6 | 2.53 | 1.6 | 203 | 94.0 | 4.0 | 2.0 |
| Example 9 | 0.5 | 1425 | 4 | Air | 0.5 | 2.52 | 1.3 | 202 | 93.5 | 4.0 | 2.5 |
| Example 10 | 0.5 | 1425 | 8 | Air | 0.6 | 2.52 | 1.3 | 207 | 94.3 | 3.6 | 2.1 |
| Example 11 | 0.5 | 1400 | 12 | $N_2$ | 0.6 | 2.52 | 0.4 | 200 | 95.9 | 3.5 | 0.6 |
| Example 12 | 0.7 | 1400 | 12 | $N_2$ | 0.7 | 2.53 | 0.4 | 230 | 96.8 | 0.9 | 2.3 |
| Example 13* | 1.0 | 1400 | 12 | $N_2$ | 1.0 | 2.51 | 0.3 | 201 | 98.5 | 1.5 | 0.0 |
| Example 14* | 1.8 | 1400 | 12 | $N_2$ | 1.1 | 2.49 | 1.0 | 200 | 98.5 | 1.5 | 0.0 |
| Example 15 | 1.5 | 1400 | 4 | Air | 0.8 | 2.52 | 0.2 | 267 | 97.2 | 1.3 | 1.5 |
| Example 16 | 1.5 | 1375 | 2 | $H_2/N_2$ | 0.8 | 2.48 | 1.7 | 241 | 97.6 | 0.2 | 2.2 |
| Example 17 | 1.5 | 1350 | 2 | $H_2/N_2$ | 0.7 | 2.48 | 1.9 | 234 | 97.3 | 0.7 | 2.0 |
| Comparative Example 1 | 6.5 | 1400 | 12 | $N_2$ | 6.6 | 2.12 | 16.5 | 66 | 96.3 | 2.4 | 1.2 |
| Comparative Example 2 | 0.5 | 1470 | 2 | Air | 0.6 | 2.42 | 4.5 | 170 | 95.6 | 4.2 | 0.1 |

*Reference example.

As shown in Table 2 and FIGS. 1 to 5, since the sintered bodies obtained in Examples 1 to 17 had a small sintered particle diameter, and contained a small amount of components other than cordierite crystals, the sintered bodies had satisfactory coefficients of thermal expansion and electric characteristics, and further satisfactory strengths were indicated. On the other hand, the sintered body obtained in Comparative Example 1 had a large sintered particle diameter, and a large total porosity, and further indicated a lower strength. Since the sintering temperature was set at about 1400°C, a sintered body indicating a higher strength was obtained. Furthermore, since the sintered body obtained in Comparative Example 2 had small sintered particles, but an excessively high sintering temperature, a large number of huge pores were generated, and the strength dropped.

INDUSTRIAL APPLICABILITY

As described above, since a dense cordierite based sintered body of the present invention exhibits a satisfactory strength, high-temperature coefficient of thermal expansion, and electric characteristics, the sintered body can be used in various applications. This sintered body can be preferably used especially in applications requiring satisfactory electric characteristic and strength, applications involving rapid temperature changes, or applications used at high temperature and required to have predetermined strength, such as a dielectric electrode, and a member for a semiconductor manufacturing apparatus.

## Claims

1. A dense cordierite based sintered body having a porosity of 2% or less and containing 93% by mass or more of cordierite among crystal components contained in the sintered body, wherein an average particle diameter of the particles which constitute the sintered body is 2 μm or less, and wherein the mullite crystal phase and at least one of the spinel and sapphirine phases are present, the total content of cordierite, mullite, spinel and sapphirine in the sintered body being 99% by mass or more.

2. The dense cordierite based sintered body according to claim 1, wherein a bending strength is 200 MPa or more.

3. The dense cordierite based sintered body according to claim 1 or 2, wherein a coefficient of thermal expansion from 40 to 600°C is $2.0 \times 10^{-6}$/K is less.

4. The dense cordierite based sintered body according to any one of claims 1 to 3, wherein the porosity is 1.5% or less.

5. The dense cordierite based sintered body according to any one of claims 1 to 3, wherein the porosity is 1% or less.

## Patentansprüche

1. Dichter Sinterkörper auf Cordieritbasis mit einer Porosität von 2 % oder weniger, der 93 Massen-% oder mehr Cordierit, bezogen auf die in dem Sinterkörper enthaltenen Kristallkomponenten, enthält, worin der mittlere Partikeldurchmesser der Partikel, die den Sinterkörper ausmachen, 2 μm oder weniger beträgt und worin die Mullitkristallphase und zumindest eine von Spinell- und Sapphirinphase vorhanden sind, wobei der Gesamtgehalt an Cordierit, Mullit, Spinell und Sapphirin in dem Sinterkörper 99 Massen-% oder mehr beträgt.

2. Dichter Sinterkörper auf Cordieritbasis nach Anspruch 1, worin die Biegefestigkeit 200 MPa oder mehr beträgt.

3. Dichter Sinterkörper auf Cordieritbasis nach Anspruch 1 oder 2, worin der Wärmeausdehnungskoeffizient von 40 auf 600 °C 2,0 x $10^{-6}$/K oder weniger beträgt.

4. Dichter Sinterkörper auf Cordieritbasis nach einem der Ansprüche 1 bis 3, worin die Porosität 1,5 % oder weniger beträgt.

5. Dichter Sinterkörper auf Cordieritbasis nach einem der Ansprüche 1 bis 3, worin die Porosität 1 % oder weniger beträgt.

## Revendications

1. Corps dense fritté à base de cordiérite ayant une porosité inférieure ou égale à 2 % et contenant 93 % en masse ou plus de cordiérite parmi les composants cristallins contenus dans le corps fritté, dans lequel un diamètre moyen des particules qui constituent le corps fritté est inférieur ou égale à 2 $\mu$m, et dans lequel la phase cristalline de mullite et au moins l'une des phases de spinelle et de sapphirine sont présentes, la teneur totale de la cordiérite, de la mullite, du spinelle et de la sapphirine dans le corps fritté étant de 99 % en masse ou plus.

2. Corps dense fritté à base de cordiérite selon la revendication 1, dans lequel une résistance à la flexion est supérieure ou égale à 200 MPa.

3. Corps dense fritté à base de cordiérite selon la revendication 1 ou 2, dans lequel un coefficient d'expansion thermique de 40 à 600 °C est inférieur ou égal à 2,0 x $10^{-6}$/K.

4. Corps dense fritté à base de cordiérite selon l'une quelconque des revendications 1 à 3, dans lequel la porosité est inférieure ou égale à 1,5 %.

5. Corps dense fritté à base de cordiérite selon l'une quelconque des revendications 1 à 3, dans lequel la porosité est inférieure ou égale à 1 %.

FIG.1

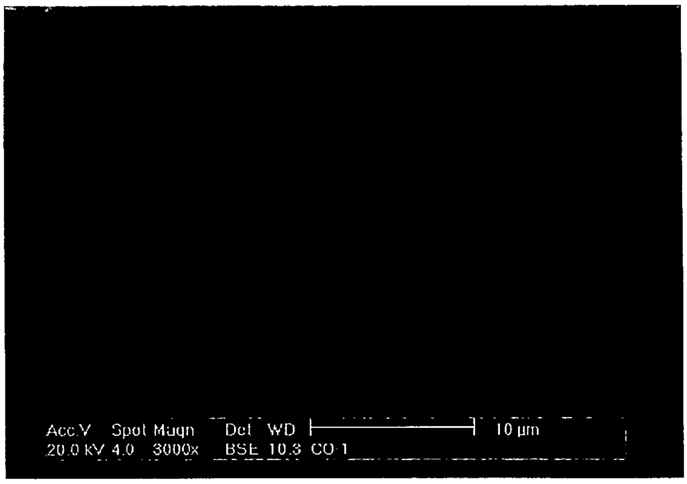


FIG.2

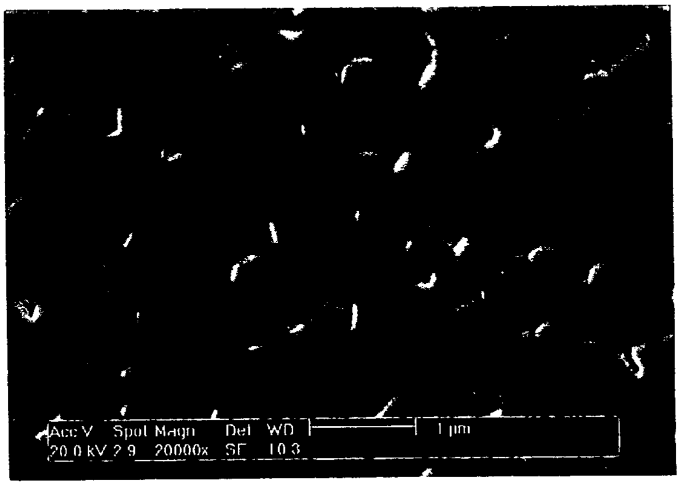


FIG.3

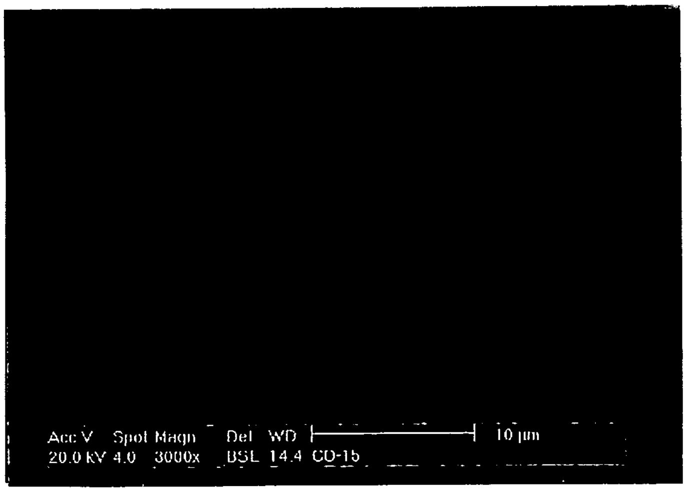

FIG.4

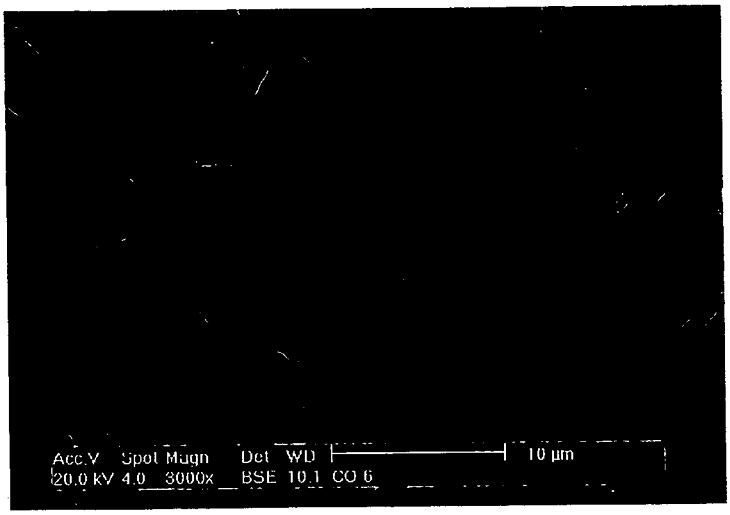
Acc.V Spot Magn Det WD 10 µm
20.0 kV 4.0 3000x BSE 10.1 CO 6

FIG.5

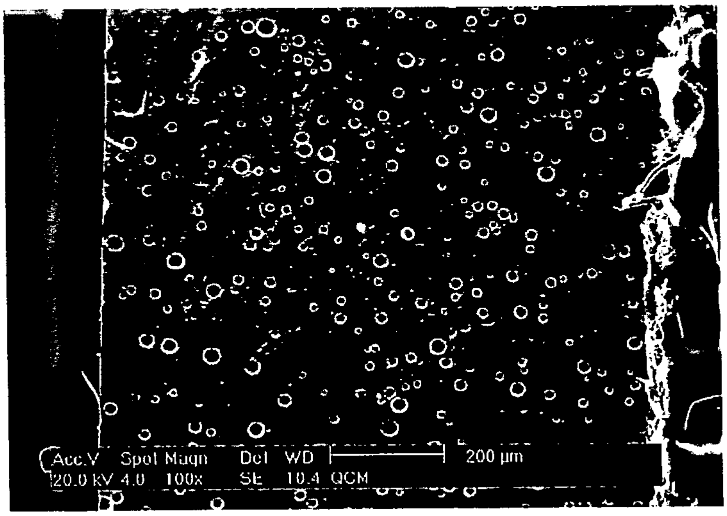
Acc.V Spot Magn Det WD 200 µm
20.0 kV 4.0 100x SE 10.4 QCM

FIG. 6

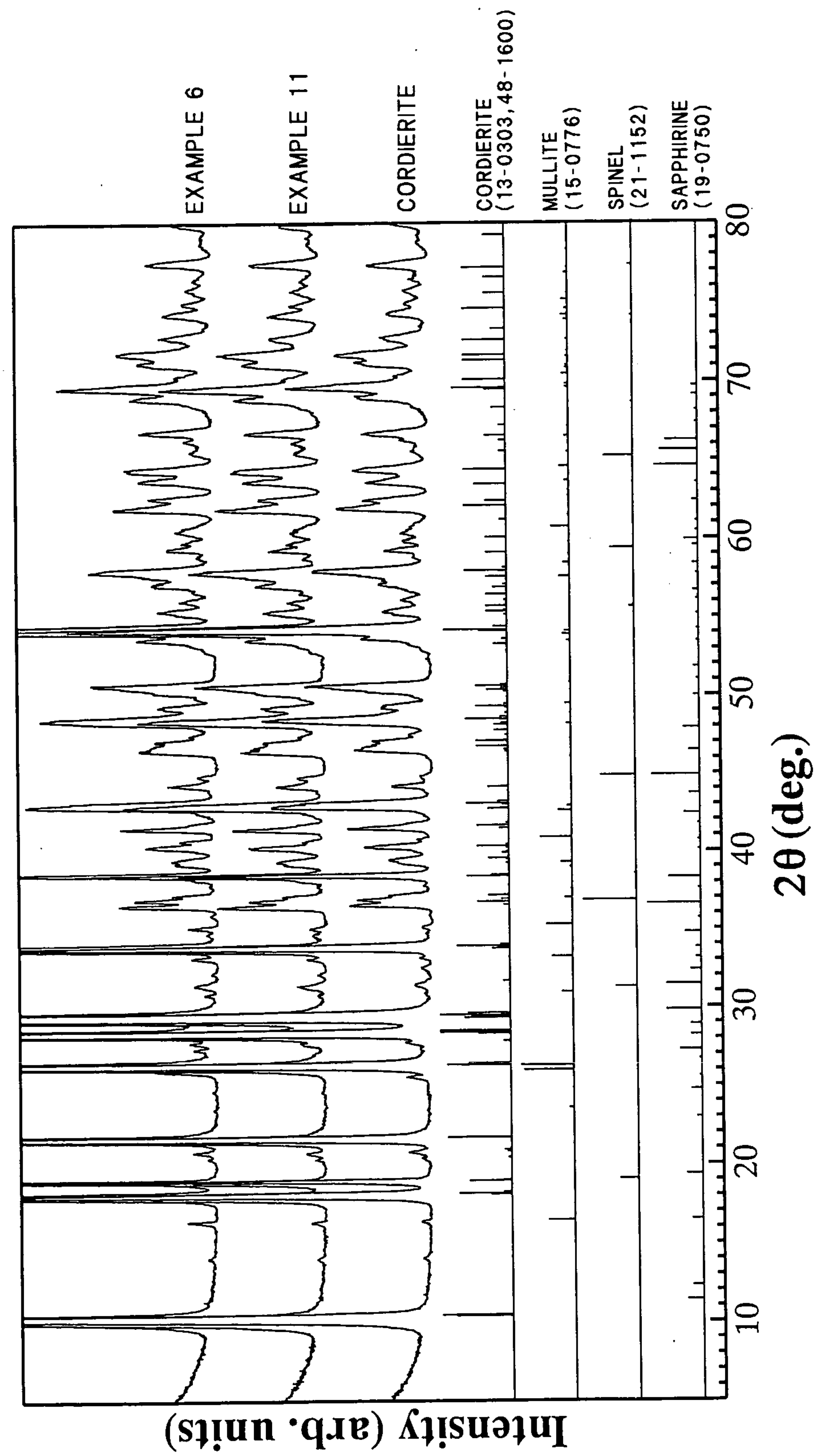
EXAMPLE 6
EXAMPLE 11
CORDIERITE
CORDIERITE (13-0303, 48-1600)
MULLITE (15-0776)
SPINEL (21-1152)
SAPPHIRINE (19-0750)
Intensity (arb. units)
10
20
30
40
50
60
70
80
2θ (deg.)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2002321969 A
- JP 6074172 A
- US 4280845 A
- EP 1338580 A


### Non-patent literature cited in the description


- **M. A. CAMERUCCI et al.** Mechanical behavior of cordierite and cordierite-mullite materials evaluated by indentation techniques. *Journal of the European Ceramic Society,* 2001, vol. 21, 1195-1204